# EUROPÄISCHE PATENTSCHRIFT

(11) **EP 1 218 690 B1**
(45) Veröffentlichungstag und Bekanntmachung des Hinweises auf die Patenterteilung: **26.04.2006**
(21) Anmeldenummer: 00960282.2
(22) Anmeldetag: 28.09.2000
(51) Int. Cl.: G01B 11/26, G01S 7/481, G01S 17/08, G01S 17/42, G01S 17/66

(54) **VERFAHREN ZUR BESTIMMUNG DER RÄUMLICHEN LAGE EINES ZIELVERFOLGUNGSSPIEGELS UND SPIEGELANORDNUNG ZUR DURCHFÜHRUNG DES VERFAHRENS**
METHOD FOR DETECTING THE SPATIAL POSITION OF A TRACKING MIRROR AND MIRROR ARRANGEMENT FOR CARRYING OUT SAID METHOD
PROCEDE PERMETTANT DE DETERMINER LA POSITION SPATIALE D'UN MIROIR DE POURSUITE ET ENSEMBLE MIROIR PERMETTANT DE METTRE EN OEUVRE LEDIT PROCEDE

(30) Priorität: 06.10.1999 CH 182899
(43) Veröffentlichungstag der Anmeldung: 03.07.2002
(73) Patentinhaber: Leica Geosystems AG, 9435 Heerbrugg (CH)
(72) Erfinder: MEIER, Dietrich, CH-5018 Niedererlinsbach (CH)
(74) Vertreter: Frei, Alexandra Sarah
(86) Internationale Anmeldenummer: PCT/CH2000/000528
(87) Internationale Veröffentlichungsnummer: WO 2001/025722

(56) Entgegenhaltungen:
- EP-A- 0 704 685
- EP-A- 0 919 830
- WO-A-93/05360
- US-A- 4 714 339
- US-A- 5 724 130

## Beschreibung

Die Erfindung betrifft ein Verfahren nach dem Oberbegriff des ersten unabhängigen Patentanspruchs. Das Verfahren dient zur Bestimmung der räumlichen Lage eines Zielverfolgungsspiegels in einem Lasertracking-System. Die Erfindung betrifft ferner eine Spiegelanordnung gemäss dem entsprechenden unabhängigen Patentanspruch, welche Spiegelanordnung zur Durchführung des Verfahrens dient

Der Zielverfolgungsspiegel ist ein wesentlicher Bestandteil von Lasertracking-Systemen, wie sie in der Industrie für präzise Koordinaten-Messungen an grossen Werkstücken bereits seit Jahren bekannt sind. Lasertracking-Systeme erlauben die Verfolgung eines sich bewegenden Ziel-Retroreflektors mit einem Tracking-Messstrahl, wobei durch entsprechende Messungen der Richtung des Messstrahles und durch interferometrische Messungen der Distanz zum Ziel-Retroreflektor die Koordinaten (z.B. Polarkoordinaten) des Ziel-Retroreflektors bestimmt werden.

Das Nachführen (englisch: tracking) des Tracking-Messstrahls, derart, dass er den bewegten Retroreflektor immer trifft, erfolgt durch eine entsprechende Nachführung des Zielverfolgungsspiegels, der üblicherweise um zwei aufeinander senkrecht stehende Achsen drehbar ist. Der Tracking-Messstrahl wird durch den Ziel-Retroreflektor zum Zielverfolgungsspiegel zurück reflektiert und von diesem zum Interferometer-Empfänger umgelenkt. Der Interferometer-Empfänger ermittelt den Abstand des Ziel-Retroreflektors zu einer definierten Null-Position des LaserInterferometers. Die räumliche Lage des Zielverfolgungsspiegels wird durch Messung erfasst und aus den Messdaten wird die Richtung des Messstrahles errechnet.

Für die Drehung des Zielverfolgungsspiegels um die Achsen sind üblicherweise auf den Achsen montierte Servomotoren vorgesehen. Zur Bestimmung der Lage des Zielverfolgungsspiegels gegenüber einer vorgegebenen Null-Lage ist üblicherweise jede der Achsen mit einem Winkelgeber (Encoder) ausgerüstet. Ein typisches, derartig ausgerüstetes Lasertracking-System mit einem Zielverfolgungsspiegel ist beispielsweise in EP0919830 oder in der Publication US-4714339 beschrieben. Dieses System weist einen in einer kardanischen Aufhängung angeordneten Zielverfolgungsspiegel auf, der dadurch um zwei aufeinander senkrecht stehende Achsen verdrehbar ist.

In *Applied Optics, Volumen 2, Nr. 7, July 1963, Seite 762ff,* ist als alternative Methode zur Winkelmessung mit Winkelgebern die Anwendung eines Michelson-Interferometers für die Erfassung einer Drehbewegung in einem Gammastrahlen-Spektrometer beschrieben. Das Michelson-Interferometer ist ein zweiarmiges Interferometer mit zwei gleich langen Armen, je einem für den Referenzstrahlengang und den Messstrahlengang. In der beschriebenen Anwendung hat der Messstrahl eine unveränderbare, auf ein Würfeleckenprisma gerichtete Richtung, wobei das Prisma an einem um eine Achse drehenden Teil angeordnet ist. Der Messstrahl wird durch das Prisma auf einen stationären Spiegel umgelenkt und vom Spiegel auf demselben Weg zurück zum Interferometer reflektiert Der Messstrahl verläuft zwischen Interferometer und Prisma parallel zu einer Tangente an den Kreisbogen, der vom Prisma bei einer Drehung um die Achse beschrieben wird. Der Referenzstrahl wird von einem stationären Spiegel zum Interferometer reflektiert Bei einer Drehung des Prismas um die Drehachse verlängert oder verkürzt sich die Länge des Messstrahlengangs, was interferometrisch erfasst wird. Aus der Veränderung der Weglänge des Messstrahlengangs für eine momentane Drehposition des Prismas gegenüber der Weglänge für eine vorbestimmte Null-Position wird auf den Drehwinkel gegenüber dieser Nullposition geschlossen.

Die beschriebene Anordnung von Prisma und Spiegel macht es notwendig, dass der Messstrahl in jeder möglichen Drehstellung des Prismas exzentrisch auf dieselbe Prismaseite trifft. Dies bedeutet, dass die Öffnung des Prismas und damit das Prisma selbst relativ gross sein müssen. Dadurch wird das Prisma relativ schwer, so dass es das Trägheitsmoment des drehenden Teils gegebenenfalls relevant beeinflusst

Die Erfindung stellt sich nun die Aufgabe, ein Verfahren zur Bestimmung der räumlichen Lage eines Zielverfolgungsspiegels in einem Lasertracking-System zu schaffen, wobei das erfindungsgemässe Verfahren gegenüber bekannten Verfahren zur Bestimmung der räumlichen Lage eines derartigen Zielverfolgungsspiegels eine höhere Genauigkeit ermöglichen soll und wobei das Verfahren eine sehr kompakte Spiegelanordnung ermöglichen soll, in der mit dem Spiegel zu bewegende Teile möglichst leicht sind, so dass einer Bewegung des Spiegels eine möglichst kleine Trägheit entgegenwirkt Es ist ferner die Aufgabe der Erfindung, eine Spiegelanordnung zur Durchführung des erfindungsgemässen Verfahrens zu schaffen. Diese soll kompakt sein und sich möglichst modular in bekannte Lasertracking-Systeme integrieren lassen.

Diese Aufgabe wird gelöst durch das Verfahren und die Vorrichtung, wie sie in den unabhängigen Patentansprüchen definiert sind. Weitere vorteilhafte Weiterbildungen der Erfindung sind Gegenstand der abhängigen Ansprüche.

Das erfindungsgemässe Verfahren beruht auf der Idee, die räumliche Lage des Zielverfolgungsspiegels eines Lasertracking-Systems nicht mit Hilfe von an Drehachsen angeordneten Winkelgebern sondern mit interferometrischen Methoden zu bestimmen. Dazu werden mindestens zwei mit dem Zielverfolgungsspiegel verbundene, das heisst, sich mit dem Zielverfolgungsspiegel bewegende Retroreflektoren und für jeden der Reflektoren ein sekundäres, interferometrisches Messsystem eingesetzt, wobei Mess- und Referenzstrahlen der sekundären Messsysteme aus dem primären Strahlengang des Lasertracking-Systems abgezweigt werden. In jedem sekundären Messsystem wird ein sekundärer Messstrahl mit unveränderbarer Richtung auf einen mit dem Zielverfolgungsspiegel bewegten Retroreflektor ausgerichtet und wird bei einer Spielgelbewegung die Veränderung der Länge des Strahlenganges des sekundären Messstrahles interferometrisch ermittelt. Retroreflektoren und sekundäre Messsysteme sind dabei derart angeordnet, dass Spiegelbewegungen Weglängen-Veränderungen der sekundären Messstrahlen bewirken und dass aus den daraus gewonnenen Messdaten, welche Abstände einer momentanen Reflektorposition von einer vorbestimmten Null-Position in der Richtung des Messtrahles charakterisieren, die Spiegellage eindeutig berechenbar ist.

Die Bewegungen eines Zielverfolgungsspiegels sind üblicherweise Rotationsbewegungen, bei denen sich auch die den sekundären Messsystemen zugeordneten Retroreflektoren auf Kreisbogen bewegen. Jeder sekundäre Messstrahl ist tangential auf einen solchen Kreisbogen gerichtet, vorteilhafterweise derart, dass er den Retroreflektor im wesentlichen zentrisch trifft, wenn sich dieser in einer mittleren Position befindet. Da die Richtung des sekundären Messstrahls immer gleich bleibt, der Reflektor sich aber nicht geradlinig im Messstrahlengang sondern auf einer Kreisbahn bewegt, ist es offensichtlich, dass die durch den Messstrahl erfassbare Bewegung des Reflektors beschränkt ist Der durch exzentrischen Einfall des Messstrahles auf den Reflektor bedingte Parallelversatz des reflektierten Messstrahles zum einfallenden Messsttahl wird mit einer Strahlenaufweiter-Optik aufgenommen.

Um die Lage der Spiegelfläche eines beliebig beweglichen Spiegels zu berechnen ist es theoretisch notwendig, die räumlichen Positionen von drei relativ zur Spiegelfläche stationär angeordneten Punkten zu vermessen. Für die Bestimmung der Lage eines um zwei stationäre, sich schneidende Achsen drehbaren Spiegels, reicht die Bestimmung der Position von zwei derartigen Punkten.

Das erfindungsgemässe Verfahren wird vorteilhafterweise durchgeführt unter Anwendung eines Interferometers mit unversetztem Rückstrahl (Einstrahl-Interferometer), das nach dem Heterodyne-Prinzip arbeitet. Dabei wird eine Frequenz-Differenz zwischen dem Messstrahl und dem Referenzstrahl ausgewertet, so dass der beim Michelson-Interferometer erforderliche Arm für den Referenzstrahlengang entfällt Ein Teil des Laserstrahles wird als Referenzstrahl abgezweigt und direkt zum Interferometer-Empfänger geleitet, das restliche Licht des Laserstrahles wird mittels akusto-optischem Modulator Frequenz-verschoben und dient als Messstrahl, d.h. durchläuft den Messstrahlengang zum Messobjekt, wird an diesem reflektiert und dann zum Interferometer-Empfänger geleitet. Das Interferometer detektiert die Interferenz, d.h. ein Signal mit einer Frequenz, die bei der Überlagerung des Messstrahls mit dem Referenzstrahl entsteht und die der Modulationsfrequenz plus/minus der Dopplerfrequenz entspricht Eine nachfolgende Elektronik vergleicht phasen- und frequenzmässig dieses Signal mit dem ursprünglichen Modulationssignal und erzeugt pro verfahrene halbe Wellenlänge je nach Richtung einen positiven oder negativen Zählimpuls.

Die sekundären Messstrahlen werden vorteilhafterweise nach dem genannten Modulator aus dem Strahlengang des primären Messsystem abgezweigt, so dass nur eine Laserquelle und nur ein Modulator vorgesehen werden müssen.

Die erfindungsgemässe Anordnung des Zielverfolgungsspiegels für ein Lasertrakking-System weist Mittel zur Veränderung der Lage des Spiegels aus einer vorbestimmten Null-Position und mindestens zwei sich mit dem Spiegel mitbewegende Retroreflektoren auf. Ferner weist sie Mittel auf für die Auslenkung von Mess- und Referenzstrahlen für mindestens zwei sekundäre Messsysteme aus dem Strahlengang des Lasertracking-Systems, Mittel zur Ausrichtung je eines sekundären Messstrahles auf einen der mit dem Zielverfolgungsspiegel verbundenen Retroreflektoren, Mittel zur interferometrischen Analyse des durch den Retroreflektor reflektierten sekundären Messstrahls zur Detektion von Weglängen-Veränderungen in dessen Strahlengang sowie Mittel zur Berechnung der räumlichen Lage des Zielverfolgungsspiegels aus den gemessenen Weglängen-Veränderungen.

Der Zielverfolgungsspiegel ist beispielsweise in an sich bekannter Weise in einer kardanischen Aufhängung um zwei zueinander orthogonale Achsen drehbar gelagert und mit Antrieben zur Drehung um diese Achsen ausgestattet.

Das erfindungsgemässe Verfahren und die erfindungsgemässe Vorrichtung werden nun anhand der folgenden Figuren im Detail beschrieben. Dabei zeigen:
- **Figur 1**: das Prinzip der Bestimmung der räumlichen Lage eines Zielverfolgungsspiegels nach einer beispielhaften Ausführungsform des erfindungsgemässen Verfahrens;
- **Figuren 2, 3 und 4**: Zielverfolgungsspiegel, Spiegelaufhängung, Antriebe zur Lageveränderung des Spiegels und Retroreflektoren einer vorteilhaften Ausfuhrungsform der erfindungsgemässen Spiegelanordnung in verschiedenen Ansichten;
- **Figuren 5 und 6**: zwei Schemas der Spiegelanordnung gemäss Figuren 2 bis 4, die die optische Anordnung zur Durchführung des erfindungsgemässen Verfahrens zeigen (Figur 5: Blockschema, Figur 6: dreidimensionales Schema der Strahlengänge),
- **Figur 7**: Zielverfolgungsspiegel, Spiegelaufnängung und Retroreflektoren einer weiteren, vorteilhaften Ausführungsform der erfindungsgemässen Spiegelanordnung.

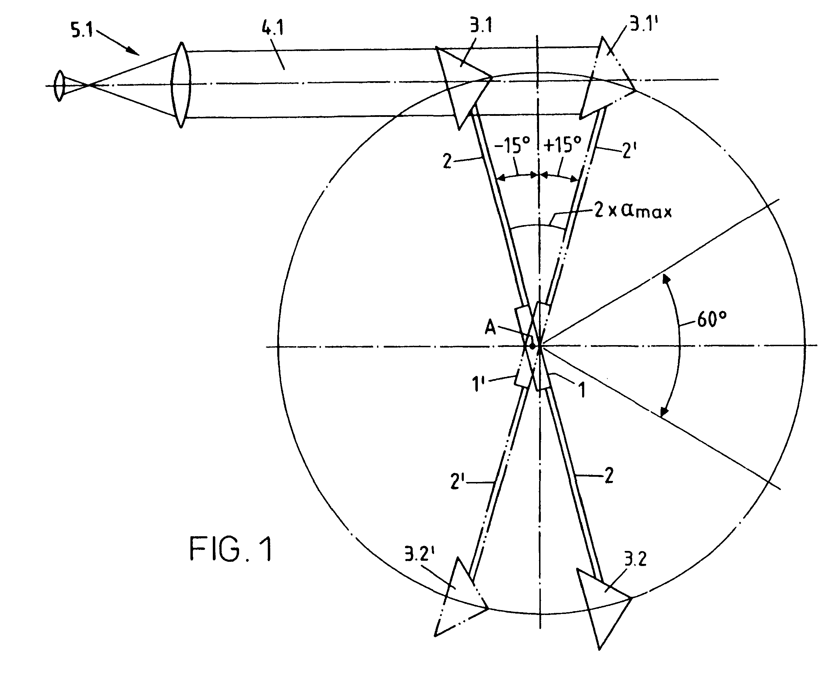

**Figur 1** illustriert das Prinzip des erfindungsgemässen Verfahrens zur Bestimmung der räumlichen Lage eines Zielverfolgungsspiegels an einer beispielhaften Ausführungsform. Die Figur zeigt einen um eine Achse A verdrehbaren Zielverfolgungsspiegel 1 mit einer zur Papierebene senkrecht stehenden Spiegelfläche, wobei die Drehachse A parallel zur Spiegelfläche angeordnet ist. Parallel zur Spiegelfläche und senkrecht zur Drehachse A verläuft eine mit dem Spiegel um die Drehachse A drehbare Verbindungsstange 2, an deren Enden je ein Retroreflektor 3.1 und 3.2 montiert ist. Der Zielverfolgungsspiegel 1, die Verbindungsstange 2 und die Retroreflektoren 3.1 und 3.2 sind in zwei Drehpositionen dargestellt, wobei die Bezugszeichen der Teile in der einen Drehposition mit Apostroph gekennzeichnet sind.

Ein sekundärer Messstrahl 4.1 (vor dem Reflektor durch eine Strahlaufweiter-Optik 5.1 auf einen der Reflektor-Öffnung im wesentlichen entsprechenden Durchmesser gebracht) ist tangential an den Kreisbogen gerichtet, den der Reflektor 3.1 bei einer Drehung des Zielverfolgungsspiegels 1 beschreibt, vorteilhafterweise derart, dass er in einer mittleren Reflektor-Position zentrisch auf den Reflektor trifft. Der Messstrahl 4 wird im Retroreflektor 3.1 reflektiert und in noch zu zeigender Weise gemeinsam mit einem entsprechenden, sekundären Referenzstrahl zu einem dem Retroreflektor 3.1 zugeordneten Interferometer geführt.

Bei einer Verschwenkung des Spiegels 1 und der Reflektoren 3.1 und 3.2 verändert sich die Weglänge des sekundären Messstrahles 4.1, wobei Weglängen-Veränderungen zwischen einer vorgegebenen Null-Position (z.B. durch mechanischen Anschlag oder optisch definiert) und einer momentanen Position interferometrisch detektiert und gemessen werden. Die Lage des Spiegels 1 (charakterisiert durch den Verdrehwinkel α) ist eindeutig bestimmt durch die Weglängen-Veränderung des sekundären Messtrahles 4.1, die durch eine Verschiebung des Retroreflektors 3.1 von seiner Null-Position (für Null-Lage des Spiegels) in eine andere, momentane Position bewegt wird.

Ein in analoger Weise auf den zweiten Retroreflektor 3.2 ausgerichtetes, sekundäres Messsystem (in der Figur 1 nicht dargestellt) misst eine gleich grosse Weglängen-Veränderung mit umgekehrtem Vorzeichen.

Der Messbereich der in der Figur 1 dargestellten Anordnung (zwischen den beiden maximalen Verschwenkungen des Spielgels aus der mittleren Lage, die mit dem Messstrahl 4.1 gerade noch detektierbar sind) ist abhängig von der Grösse des Reflektors, von seinem Abstand von der Drehachse A und von den optischen Mitteln, mit denen der sekundäre Messstrahl erzeugt und analysiert wird. Je weiter der Reflektor von der Drehachse A entfernt wird, desto grösser wird die Exzentrizität des Strahleneinfalles bei gleicher Spiegelverdrehung, das heisst, der Messbereich wird kleiner. Andererseits wird mit wachsendem Abstand zwischen Retroreflektor und Drehachse die Messauflösung grösser. Es zeigt sich, dass für übliche Anwendungen unter Verwendung von Tripelprisma-Reflektoren in einer Kugel mit einem Durchmesser von ca 12 mm eine befriedigende Messauflösung erreicht wird mit einem Abstand zwischen Reflektor 3.1 und Drehachse A im Bereiche von ca. 100 mm. In einer derartigen Anordnung ergibt sich eine maximale Verdrehung des Spiegels 1 aus seiner mittleren Lage um einen Winkel αₘₐₓ von ca. +/- 15°, was für den vom Zielverfolgungsspiegel umgelenkten, primären Messstrahl des Lasertracking-Systems einen maximalen Verschwenkbereich von ca. +/- 30° bedeutet (effektiver Messbereich des Lasertracking-Systems).

Figur 1 zeigt den Zielverfolgungsspiegel 1 und die Reflektoren in ihren weitmöglichst von der mittleren Position entfernten Positionen (Verdrehwinkel gleich +/-15°). Der Messbereich von 60° für die ganze Anordnung ist mit unterbrochenen Linien angedeutet.

Für eine Spiegelanordnung mit einem in der oben genannten Weise beschränkten Verschwenkbereich können für die Spiegelverschwenkung einfachere und kleinere Motoren eingesetzt werden, als dies gemäss dem Stande der Technik üblich ist. Daraus ergibt sich eine sehr kompakte Spiegelanordnung. Es eignen sich insbesondere sog. "limited angle torque motors" die nach dem Galvanometer-System arbeiten. Um das Trägheitsmoment der sich mit dem Spiegel bewegenden Teile weiter zu reduzieren ist es auch möglich, entsprechende Motoren nicht mit dem Zielverfolgungsspiegel beweglich, sondern ortsfest zu montieren und sie mit geeigneten Kraftübertragungsmitteln (z.B. Seilzügen) an die zu bewegenden Teile der Spiegelanordnung zu koppeln.

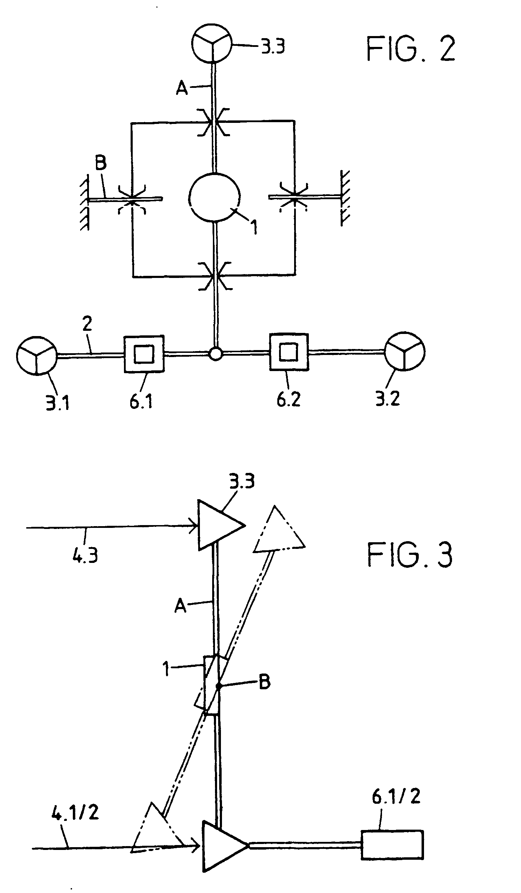

**Figuren 2, 3 und 4** zeigen in drei verschiedenen Ansichten den Zielverfolgungsspiegel 1, eine Spiegelaufhängung mit Antrieben zur Lageveränderung des Spiegels und Retroreflektoren zur Bestimmung der Spiegellage einer vorteilhaften Ausführungsform der erfindungsgemässen Spiegelanordnung.

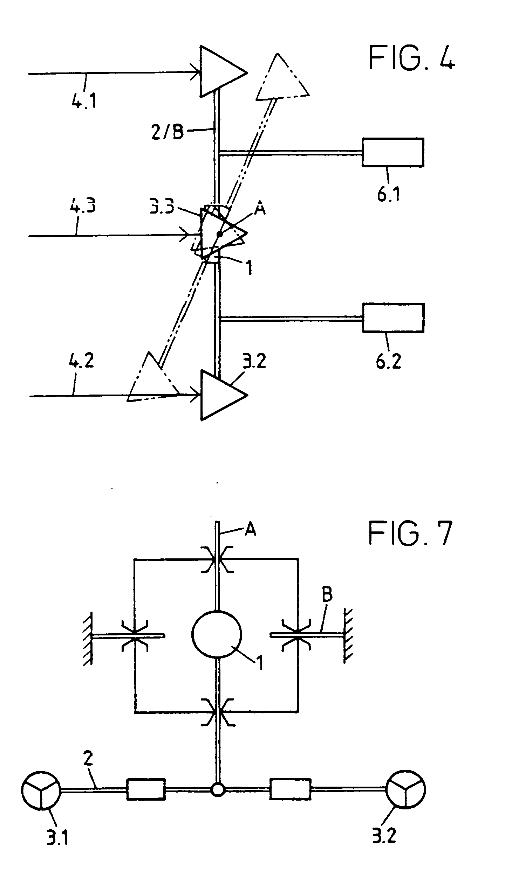

Die Spiegelaufhängung ist eine kardanische Aufhängung, in der der Spiegel um eine "innere" Achse A drehbar ist und unabhängig davon auch um eine "äussere" Achse B. Die beiden Achsen A und B stehen senkrecht aufeinander, kreuzen sich und verlaufen parallel zur Spiegelfläche des Zielverfolgungsspiegels 1. Figur 2 zeigt die Anordnung mit Blickwinkel senkrecht zur Spiegelfläche (Spiegel in mittlerer Lage), Figur 3 mit Blickrichtung senkrecht zur inneren Achse A (Spiegel ausgezogen in mittlerer Lage und strichpunktiert in einer um die Achse B verschwenkten Lage) und Figur 4 mit Blickrichtung senkrecht zur äusseren Achse B (Spiegel ausgezogen in mittlerer Lage und strichpunktiert in einer um die Achse A verschwenkten Lage).

Die Spiegelanordnung weist drei Retroreflektoren 3.1 bis 3.3 auf, wobei die Reflektoren 3.1 und 3.2 analog zur in der Figur 1 dargestellten Anordnung an den Enden einer mit dem Spiegel 1 um die innere Achse A drehbaren Verbindungsstange 2 und der Reflektor 3.3 an einer Verlängerung der inneren Achse A angeordnet ist

Die Figuren 2 bis 4 zeigen ebenfalls schematisch für eine Verdrehung des Spiegels um die innere Achse A an der Verbindungsstange 2 angreifende Antriebe 6.1 und 6.2. Die Antriebe sind beispielsweise stationär montierte Motoren, die über beispielsweise Seilzüge mit den zu bewegenden Teilen wirkverbunden sind. Es können auch Gewindestangen als Kraftübertragungsmittel vorgesehen werden, wobei dann die Motoren mit schwenkbarer Achse und verdrehgesichertem Stator zu montieren sind.

Alle drei Retroreflektoren 3.1 bis 3.3 bilden vorteilhafterweise die Ecken eines im wesentlichen gleichseitigen Dreiecks, in dessen Zentrum der Schnittpunkt der beiden Achsen A und B und der Zielverfolgungsspiegel 1 angeordnet ist Diese Anordnung ergibt im wesentlichen gleiche Empfindlichkeitsdifferenzen für die Vermessung der Verdrehung um die beiden Achsen A und B.

Auf jeden Retroreflektor 3.1 bis 3.3 ist ein sekundärer Messstrahl 4.1 bis 4.3 gerichtet, wobei die Messstrahlen vorteilhafterweise parallel zueinander und senkrecht zur Spiegelfläche in der mittleren Position des Zielverfolgungsspiegels 1 ausgerichtet sind

Eine Bestimmung der Spiegellage mit Hilfe von drei, mit dem Spiegel bewegten Retroreflektoren 3.1, 3.2, 3.3 und drei sekundären Messsystemen, wie dies in den Figuren 2 bis 4 illustriert ist, ist unabhängig vom Lagerspiel der Aufhängung, was zu einer sehr hohen Genauigkeit führt.

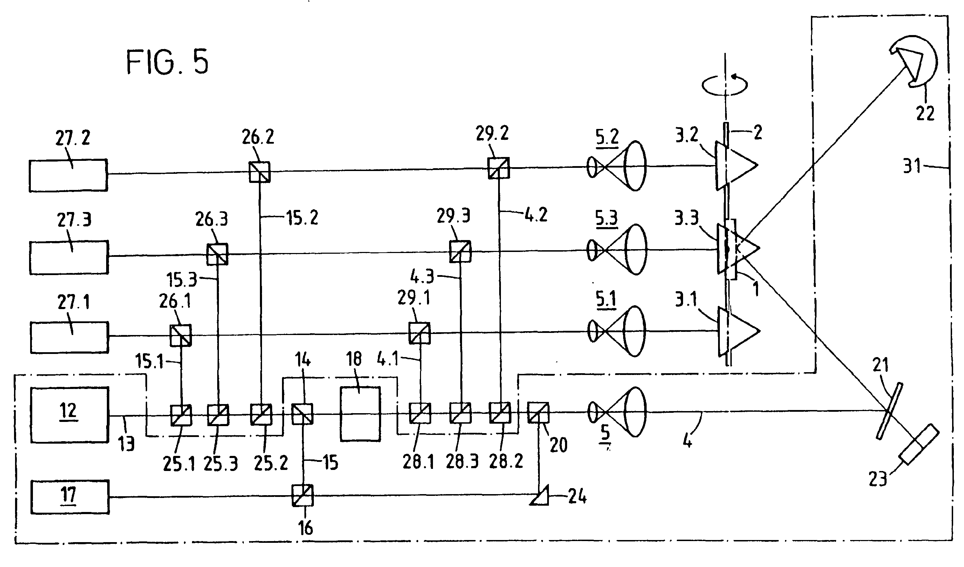

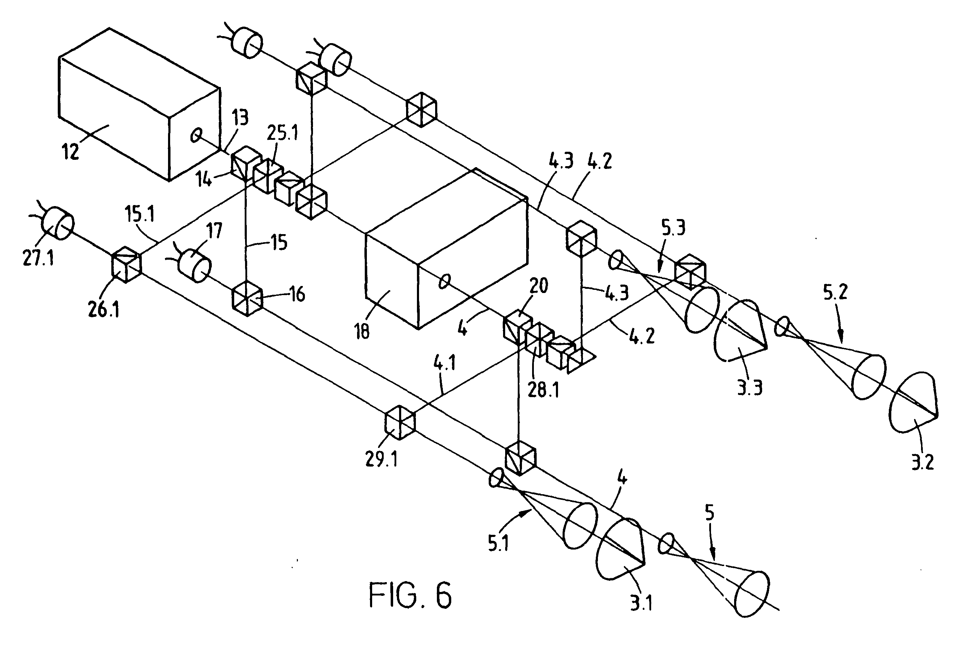

**Figuren 5 und 6** zeigen insbesondere die optischen Elemente und Strahlengänge eines Lasertracking-Systems, in dem die Lage des Zielverfolgungsspiegels 1 einer Spiegelanordnung gemäss Figuren 2 bis 4 mit Hilfe des erfindungsgemässen Verfahrens bestimmt wird. Figur 5 ist eine Art Blockschema und zeigt auch die Spiegelanordnung (Ansicht wie Figur 4) sowie den Ziel-Retroreflektor 22 und Teile des Regelsystems zur Nachführung des primären Messstrahles 4. Figur 6 ist eine dreidimensionale Darstellung der Strahlengänge einer von der Anordnung gemäss Figur 5 geringfügig abweichenden optischen Anordnung, die demselben Zwecke dient. Im Zusammenhang mit den Figuren 1 bis 4 bereits beschriebene Elemente sind mit den gleichen Bezugszeichen bezeichnet.

Die in den Figuren 5 und 6 dargestellten primären und sekundären Messsysteme arbeiten nach dem weiter oben kurz beschriebenen Heterodyne-Verfahren. Die optischen Elemente und deren Funktionen im Gesamtsystem sind in den folgenden, sich insbesondere auf Figur 5 beziehenden Abschnitten beschrieben.

Ein Laser 12 eines Lasertracking-Systems sendet einen Laserstrahl 13 mit sehr grosser Kohärenzlänge aus. Aus diesem Laserstrahl 13 wird mit einem Strahlteiler 14 ein primärer Referenzstrahl 15 ausgekoppelt und durch Umlenkung an einem Strahlteiler 16 direkt auf einen Interferometer-Empfänger 17 geführt. Der durch den Strahlteiler 14 hindurchtretende Anteil des Laserstrahls 13 durchläuft einen akustooptischen Modulator 18 und verlässt diesen als frequenzverschobener, primärer Messstrahl 4. Dieser durchläuft einen Strahlteiler 20 und eine Strahlaufweitungsoptik 5. Dann wird er an einem Strahlteiler 21 zum Zielverfolgungsspiegel 1 hin umgelenkt und von diesem auf den Ziel-Retroreflektor 22 (z.B. Tripelspiegel, Tripelprisma oder Katzenauge) gerichtet. Im Retroreflektor 22 wird der primäre Messstrahl 4 in sich gefaltet und fallt über den Zielverfolgungsspiegel 1 zum Strahlteiler 21 zurück. Ein Anteil des im Retroreflektor 22 reflektierten primären Messstrahls 4 passiert den Strahlteiler 21 und fällt auf einen positionsempfindlichen Detektor 23. Dieser Detektor bestimmt den Zielfehler des primären Messstrahles und generiert entsprechende Signale, die als Regelgröße für das Nachstellen des Zielverfolgungsspiegels 1 durch Drehen benutzt werden. Der Zielverfolgungsspiegel 1 wird stets so gedreht, dass der an ihm zum Ziel-Retroreflektor 22 umgelenkte Tracking-Messstrahl 4 den Kontakt zu dem Ziel-Retroreflektor 22 nicht verliert, sondern diesen stets verfolgt (englisch "tracking").

Der am Strahlteiler 21 reflektierte Anteil des vom Ziel-Retroreflektor 22 reflektierten, primären Messstrahls 4 durchläuft die Strahlaufweitungsoptik 5 nun in umgekehrter Richtung. Dann wird er durch den Strahlteiler 20 umgelenkt und über einen Umlenkspiegel 24 durch den Strahlteiler 16 zum Interferometer-Empfänger 17 geleitet. Der Interferometer-Empfänger 17 detektiert die Interferenz aus der Überlagerung von primärem Referenzstrahl 15 und primärem Messstrahl 4. Aus den Messwerten wird der Abstand des Ziel-Retroreflektors 22 von einer vorher definierten Null-Position bestimmt.

Das primäre Messsystem 31 (in der Figur 5 mit einer strichpunktierten Linie umrandet) mit den Komponenten Laser 12, akusto-optischem Modulator 18, Strahlaufweitungsoptik 5, Strahlteiler 21, Ziel-Retroreflektor 22, positionsempfindlichern Detektor 23 und Interferometer-Empfänger 17 sowie den zur Umlenkung nötigen weiteren Strahlteilern 14, 16, 20 und 24 ist eine an sich bekannte bauliche Einheit, in die der Zielverfolgungsspiegel 1 in einer erfindungsgemässen Spiegelanordnung eingesetzt wird.

Die Spiegelanordnung weist drei Retroreflektoren 3.1, 3.2, 3.3 und zur interferometrischen Messung von Positionsänderungen dieser Reflektoren drei sekundäre Messsysteme auf, die je mit einem sekundären Messstrahl 4.1, 4.2, 4.3 und einem sekundären Referenzstrahl 15.1, 15.2, 15.3 arbeiten. Die sekundären Mess- und Referenzstrahlen werden aus dem primären Messsystem ausgekoppelt.

Dazu wird zunächst mit einem Strahlteiler 25.1 aus dem Laserstrahl 13 ein Referenzstrahl 15.1 für das dem Retroreflektor 3.1 zugeordnete, sekundäre Messsystem abgezweigt und über einen Strahlteiler 26.1 auf einen dem Retroreflektor 3.1 zugeordneten Interferometer-Empfänger 27. geführt.

Aus dem modulierten, primären Messstrahl 4 wird mit einem Strahlteiler 28.1 ein dem Retroreflektor 3.1 zugeordneter, sekundärer Messstrahl 4.1 abgezweigt. Er wird über einen Strahlteiler 29.1 zu einer Strahlaufweitungsoptik 5.1 umgelenkt, durchläuft diese und trifft auf den Retroreflektor 3.1. Damit hat der sekundäre Messstrahl 4.1 das Ende seiner Messstrecke erreicht, nämlich den Retroreflektor 3.1 selbst. Von dort durchläuft der Messstrahl 4.1 die Strahlaufweitungsoptik 5.1 in umgekehrter Richtung und dann den Strahlteiler 29.1 und den Strahlteiler 26.1. Dann wird er, ebenso wie der Referenzstrahl 15.1, zu dem Interferometer-Empfanger 27.1 geführt. Dieser Interferometer-Empfänger 27.1 detektiert die Interferenz aus der Überlagerung des sekundären Referenzstrahls 15.1 und des sekundären Messstrahls 4.1. Aus den Messwerten wird die Auswanderung des Retroreflektors 3.1 aus einer vorher definierten Nullage bestimmt

Dasselbe gilt in analoger Weise für die anderen beiden weiteren, sekundären Messsysteme, die den Retroreflektoren 3.2 und 3.3 zugeordnet sind.

**Figur 7** zeigt eine weitere Ausführungsform der erfindungsgemässen Spiegelanordnung, die mit der Anordnung gemäss Figuren 2 bis 4 übereinstimmt, an der aber der dritte, an der inneren Drehachse A angeordnete Reflektor 3.3 und ein drittes sekundäres Messsystem fehlt Bei der Verwendung von nur zwei Retroreflektoren 3.1 und 3.2 und ihnen zugeordneten, sekundären Messsystemen wird der zentrale Drehpunkt der kardanischen Aufhängung als dritter Punkt zur Bestimmung der Lage der Spiegelfläche herangezogen. Dieser Punkt hat zwar eine im wesentlichen stationäre Lage, die aber vom Lagerspiel der Aufhängung abhängig ist, so dass die Bestimmung der Lage des Zielverfolgungsspiegels der Spiegelanordnung gemäss Figur 7 im Gegensatz zur Anordnung gemäss Figuren 2 bis 4 vom Lagerspiel abhängig ist

Eine Verdrehung des Zielverfolgungsspiegel der Spiegelanordnung gemäss Figur 7 um die innere Achse A ergibt entgegengesetzt gleiche Weglängen-Veränderungen für die beiden, den Reflektoren 3.1 und 3.2 zugeordneten sekundären Messsysteme, eine Verdrehung um die äussere Achse B ergibt gleiche Weglängen-Veränderungen. Aus dieser Beziehung lässt sich zusammen mit der bekannten Position des Achsenschnittpunktes relativ zur Spiegelfläche die Lage des Spiegels berechnen.

## Patentansprüche

1. Verfahren zur Bestimmung der räumlichen Lage eines bewegbaren Zielverfolgungsspiegels (1) in einem Lasertracking-System, in welchem System durch Veränderung der räumlichen Lage des Zielverfolgungsspiegels (1) die Richtung eines primären Messstrahles (4) verändert wird und durch Bestimmung der räumlichen Lage des Zielverfolgungsspiegels (1) Richtungsänderungen des primären Messstrahles (4) erfasst werden und in welchem System mit interferometrischen Methoden Weglängen-Veränderungen im Strahlengang des primären Messstrahles (4) erfasst werden, **dadurch gekennzeichnet, dass** aus dem primären Messstrahl (4) mindestens zwei sekundäre Messstrahlen (4.1, 4.2, 4.3) und den sekundären Messstrahlen (4.1, 4.2, 4.3) zugeordnete Referenzstrahlen (15.1, 15.2, 15.3) ausgelenkt werden, dass die sekundären Messstrahlen (4.1, 4.2, 4.3) mit unveränderbarer Richtung gegen je einen mit dem Zielverfolgungsspiegel (1) bewegbaren Retroreflektor (3.1, 3.2, 3.3) gerichtet werden, dass Veränderungen der Weglänge der sekundären Messstrahlen (4.1, 4.2, 4.2) bei einer Bewegung des Zielverfolgungsspiegels (1) aus einer vorbestimmten Null-Lage in eine zu bestimmende Lage durch interferometrische Analyse jede sekundären Messtrahles (4.1, 4.2, 4.3) und des ihm zugeordneten Referenzstrahles (15.1, 15.2, 15.3) erfasst werden und dass die interferometrisch erfassten Weglängen-Veränderungen für die Berechnung der zu bestimmenden Lage des Zielverfolgungsspiegels (1) verwendet werden.

2. Verfahren nach Anspruch 1, **dadurch gekennzeichnet, dass** der Zielverfolgungsspiegel (1) um mindestens eine Drehachse (A) drehbar ist und dass die sekundären Messstrahlen (4.1, 4.2, 4.3) tangential an Kreisbogen gerichtet sind, auf denen sich die Retroreflektoren (3.1, 3.2, 3.3) bei einer Verdrehung des Zielverfolgungsspiegels (1) bewegen.

3. Verfahren nach Anspruch 1 oder 2, **dadurch gekennzeichnet, dass** der Zielverfolgungsspiegel (1) um zwei sich senkrecht schneidende und parallel zu seiner Spiegelfläche angeordnete Drehachsen (A und B) drehbar ist, dass die Retroreflektoren (3.1, 3.2, 3.3) in einer Ebene parallel zur Spiegelfläche des Zielverfolgungsspiegels (1) angeordnet sind und dass die sekundären Messstrahlen (4.1, 4.2, 4.3) zueinander parallel sind und, wenn der Zielverfolgungsspiegel (1) in einer mittleren Lage ist, senkrecht auf die Spiegelfläche ausgerichtet sind.

4. Verfahren nach einem der Ansprüche 1 bis 3, **dadurch gekennzeichnet, dass** drei Retroreflektoren (3.1, 3.2, 3.3) derart angeordnet werden, dass ihre Positionen die räumliche Lage der Spiegelfläche des Zielverfolgungsspiegels (1) eindeutig bestimmen.

5. Verfahren nach Anspruch 3, **dadurch gekennzeichnet, dass** zwei Retroreflektoren (3.1, 3.2) derart angeordnet werden, dass sie zusammen mit den Drehachsen (A, B) die räumliche Lage des Spiegelfläche des Zielverfolgungsspiegels (1) eindeutig bestimmen.

6. Verfahren nach einem der Ansprüche 1 bis 5, **dadurch gekennzeichnet, dass** die Weglängen-Veränderungen der Strahlengänge des primären und der sekundären Messstrahlen (4, 4.1, 4.2, 4.3) interferometrisch nach dem Heterodyne-Verfahren gemessen werden.

7. Verfahren nach Anspruch 6, **dadurch gekennzeichnet, dass** ein Laserstrahl (13) in einem Modulator (18) zum primären Messstrahl (4) moduliert wird, dass vor dem Modulator (18) ein primärer und mindestens zwei sekundäre Referenzstrahlen (15, 15.1, 15.2, 15.3) aus dem Laserstrahl (13) ausgelenkt werden und dass nach dem Modulator (18) die sekundären Messstrahlen (4.1, 4.2, 4.3) aus dem primären Messstrahl (4) ausgelenkt werden.

8. Spiegelanordnung für ein Lasertracking-System, welche Spiegelanordnung einen Zielverfolgungsspiegel (1), Mittel zum Verändern der räumlichen Lage des Zielverfolgungsspiegels (1). Mittel zur Erzeugung eines auf den Zielverfolgungsspiegel (1) gerichteten, primären Messstrahles (4) mit einer durch Veränderung der räumlichen Lage des Zielverfolgungsspiegels (1) veränderbaren Richtung, Mittel zur Erfassung der räumlichen Lage des Zielverfolgungsspiegels (1) zur Bestimmung von Richtungsänderungen des primären Messstrahles (4) und Mittel zur interferometrischen Erfassung von Weglängen-Veränderungen im Strahlengang des primären Messstrahles (4), **dadurch gekennzeichnet, dass** das Mittel zur Bestimmung der räumlichen Lage des Zielverfolgungsspiegels (1) mindestens zwei Retroreflektoren (3.1, 3.2, 3.3) aufweist, die mit dem Zielverfolgungsspiegel (1) derart verbunden sind, dass bei einer Lageveränderung des Zielverfolgungsspiegels (1) ihre Position verändert wird, sowie Mittel (28.1, 28.2, 28.3) zum Auslenken von mindestens zwei, je einem Retroreflektor (3.1, 3.2, 3.3) zugeordneten, sekundären Messstrahlen (4.1, 4.2, 4.3) und diesen zugeordneten Referenzstrahlen (15.1, 15.2, 15.3) aus dem primären Messstrahl (4), Mittel (29.1, 29.2, 29.3) zur Ausrichtung der sekundären Messstrahlen (4.1, 4.2, 4.3) auf je einen der Retroreflektoren (3.1, 3.2, 3.3), Mittel zur interferometrischen Analyse der einander zugeordneten sekundären Mess- und Referenzstrahlen zur Erfassung von Weglängen-Veränderungen in den Strahlengängen der sekundären Messstrahlen (4.1, 4.2, 4.3) und Mittel zur Berechnung der räumlichen Lage des Zielverfolgungsspiegels (1) aus den erfassten Weglängen-Veränderungen in den Strahlengängen der sekundären Messstrahlen (4.1, 4.2, 4.3).

9. Spiegelanordnung nach Anspruch 8, **dadurch gekennzeichnet, dass** die Mittel zum Erfassen von Weglängen-Veränderungen im Strahlengang des primären und der sekundären Messtrahles (4, 4.1, 4.2, 4.3) nach dem Heterodyne-Verfahren arbeitende Interferometer-Messsysteme sind, dass Mittel (14) zum Auslenken eines primären Referenzstrahles (15) aus einem Laserstrahl (13) und einen Modulator (18) zur Modulierung des Laserstrahles (13) zum primären Messstrahl (4) aufweist und dass vor dem Modulator (18) Mittel (25.1, 25.2, 25.3) zum Auslenken der sekundären Referenzstrahlen (15.1, 15.2, 15.3) vorgesehen sind und die Mittel (28.1, 28.2, 28.3) zum Auslenken der sekundären Messstrahlen (4.1, 4.2, 4.3) nach dem Modulator (18) angeordnet sind.

10. Spiegelanordnung nach Anspruch 8 oder 9, **dadurch gekennzeichnet, dass** der Zielverfolgungsspiegel (1) um mindestens eine Drehachse (A, B) drehbar angeordnet ist und dass die sekundären Messstrahlen (4.1, 4.2, 4.3) tangential an von den Retroreflektoren (3.1, 3.2, 3.3) bei einer Verdrehung des Zielverfolgungsspiegels (1) beschriebene Kreisbogen gerichtet sind.

11. Spiegelanordnung nach Anspruch 10, **dadurch gekennzeichnet, dass** der Zielverfolgungsspiegel (1) in einer kardanischen Aufhängung gelagert ist, in der er um eine innere Achse (A) und um eine äussere Achse (B) drehbar ist, welche Achsen (A, B) sich senkrecht schneiden und parallel zur Spiegelfläche des Zielverfolgungsspiegels (1) angeordnet sind.

12. Spiegelanordnung nach Anspruch 11, **dadurch gekennzeichnet, dass** die primären Messstrahlen (4.1, 4.2, 4.3) parallel zueinander und senkrecht zur Spiegelfläche des Zielverfolgungsspiegels (1) ausgerichtet sind, wenn dieser sich in einer mittleren Lage befindet.

13. Spiegelanordnung nach einem der Ansprüche 11 oder 12, **dadurch gekennzeichnet, dass** zwei Retroreflektoren (3.1, 3.2) an einer mit dem Zielverfolgungsspiegel (1) um die innere Achse (A) drehbaren Verbindungsstange (2) angeordnet sind.

14. Spiegelanordnung nach Anspruch 13, **dadurch gekennzeichnet, dass** ein dritter Retroreflektor (3.3) an der inneren Achse (A) angeordnet ist.

15. Spiegelanordnung nach Anspruch 14, **dadurch gekennzeichnet, dass** die drei Retroreflektoren (3.1, 3.2, 3.3) ein gleichseitiges Dreieck bilden, das parallel zur Spiegelfläche des Zielverfolgungsspiegels (1) angeordnet ist und dessen Mittelpunkt die Projektion des Achsenschnittpunktes ist.

16. Spiegelanordnung nach einem der Ansprüche 10 bis 15, **dadurch gekennzeichnet, dass** zur Verdrehung des Zielverfolgungsspiegels (1) stationäre Motoren (6.1. 6.2) und Kraftübertragungsmittel vorgesehen sind.

17. Spiegelanordnung nach Anspruch 16, **dadurch gekennzeichnet, dass** die Kraftübertragungsmittel Seilzüge oder Gewindestangen sind.

## Revendications

1. Procédé pour la détermination de la position dans l'espace d'un miroir-cible de poursuite (1) mobile dans un système de poursuite par laser, système dans lequel la direction d'un faisceau de mesure primaire (4) est modifiée par un changement de la position dans l'espace du miroir-cible de poursuite (1) et la détermination de la position dans l'espace du miroir-cible de poursuite (1) permet de détecter les changements de direction du faisceau de mesure primaire (4), et dans lequel les modifications de la longueur de trajet du faisceau de mesure primaire (4) sont détectées par des méthodes d'interférométrie, **caractérisé en ce qu'**au moins deux faisceaux de mesure secondaires (4.1, 4.2, 4.3) et des faisceaux de référence (15.1, 15.2, 15.3) associés aux faisceaux de mesure secondaires (4.1, 4.2, 4.3) sont déviés à partir du faisceau de mesure primaire (4), **en ce que** les faisceaux de mesure secondaires (4.1, 4.2, 4.3) sont dirigés selon une direction immuable chacun vers un rétroréflecteur (3.1, 3.2, 3.3) mobile avec le miroir-cible de poursuite (1), **en ce que** les modifications de la longueur de trajet des faisceaux de mesure secondaires (4.1, 4.2, 4.3) liées à un déplacement du miroir-cible de poursuite (1) d'une position à zéro à une position à déterminer sont captées par analyse interférométrique de chaque faisceau de mesure secondaire (4.1, 4.2, 4.3) et du faisceau de référence (15.1, 15.2, 15.3) correspondant, et **en ce que** les modifications de la longueur de trajet détectées par interférométrie sont utilisées pour le calcul de la position du miroir-cible de poursuite (1) qui doit être déterminée.

2. Procédé selon la revendication 1, **caractérisé en ce que** le miroir-cible de poursuite (1) peut tourner autour d'au moins un axe de rotation (A) et **en ce que** les faisceaux de mesure secondaires (4.1, 4.2, 4.3) sont tangents à des segments de cercle sur lesquels les rétroréflecteurs (3.1, 3.2, 3.3) se déplacent lors d'une rotation du miroir-cible de poursuite (1).

3. Procédé selon la revendication 1 ou 2, **caractérisé en ce que** le miroir-cible de poursuite (1) peut tourner autour de deux axes de rotation (A et B) qui se coupent à angle droit et sont disposés parallèlement à sa surface réfléchissante, **en ce que** les rétroréflecteurs (3.1, 3.2, 3.3) sont disposés dans un plan parallèlement à la surface réfléchissante du miroir-cible de poursuite (1) et **en ce que** les faisceaux de mesure secondaires (4.1, 4.2, 4.3) sont parallèles les uns aux autres et, lorsque le miroir-cible de poursuite (1) se trouve dans une position centrale, dirigés perpendiculairement à la surface réfléchissante.

4. Procédé selon l'une ou l'ensemble des revendications 1 à 3, **caractérisé en ce que** trois rétroréflecteurs (3.1, 3.2, 3.3) sont disposés de telle manière que leurs positions déterminent sans équivoque la position dans l'espace de la surface réfléchissante du miroir-cible de poursuite (1).

5. Procédé selon la revendication 3, **caractérisé en ce que** deux rétroréflecteurs (3.1, 3.2) sont disposés de telle manière qu'ils déterminent sans équivoque, avec les axes de rotation (A, B), la position dans l'espace de la surface réfléchissante du miroir-cible de poursuite (1),

6. Procédé selon l'une ou l'ensemble des revendications 1 à 5, **caractérisé en ce que** les modifications de la longueur de trajet des faisceaux de mesure primaire et secondaires (4, 4.1, 4.2, 4.3) sont mesurées par interférométrie selon la méthode hétérodyne.

7. Procédé selon la revendication 6, **caractérisé en ce qu'**un faisceau laser (13) est modulé dans un modulateur (18) pour donner le faisceau de mesure primaire (4), **en ce qu'**un faisceau de référence primaire et au moins deux faisceaux de référence secondaires (15, 15.1, 15.2, 15.3) sont déviés à partir du faisceau laser (13) avant le modulateur (18) et **en ce que** les faisceaux de mesure secondaires (4.1, 4.2, 4.3) sont déviés à partir du faisceau de mesure primaire(4) après le modulateur (18).

8. Disposition de miroir pour un système de poursuite par laser, laquelle disposition de miroir comprend un miroir-cible de poursuite (1), des moyens pour modifier la position dans l'espace du miroir-cible de poursuite (1), des moyens pour produire un faisceau de mesure primaire (4) dirigé vers le miroir-cible de poursuite (1) selon une direction qui peut être modifiée par la modification de la position dans l'espace du miroir-cible de poursuite (1), des moyens pour détecter la position dans l'espace du miroir-cible de poursuite (1) afin de déterminer les changements de position du faisceau de mesure primaire (4) et des moyens pour la détection par interférométrie des modifications de la longueur de trajet du faisceau de mesure primaire (4), **caractérisée en ce que** le moyen pour la détermination de la position dans l'espace du miroir-cible de poursuite (1) comprend au moins deux rétroréflecteurs (3,1, 3.2, 3.3) qui sont reliés avec le miroir-cible de poursuite (1) de telle manière que leur position change lors d'un changement de position du miroir-cible de poursuite (1), ainsi que des moyens (28.1, 28.2, .28.3) pour dévier au moins deux faisceaux de mesure secondaires (4.1, 4.2, 4.3) associés chacun à un rétroréflecteur (3.1, 3.2, 3.3) et des faisceaux de référence (15.1, 15.2, 15.3) à partir du faisceau de mesure primaire (4), des moyens (29.1, 29.2, 29.3) pour l'orientation des faisceaux de mesure secondaires (4.1, 4.2, 4.3) chacun vers l'un des rétroréflecteurs (3.1, 3.2, 3.3), des moyens pour l'analyse interférométrique des faisceaux de mesure et de référence secondaires associés l'un à l'autre en vue de détecter les modifications de la longueur de trajet des faisceaux de mesure secondaires (4.1, 4.2, 4.3) et des moyens pour calculer la position dans l'espace du miroir-cible de poursuite (1) à partir des changements de longueur de trajet détectées dans les trajets des faisceaux de mesure secondaires (4.1, 4.2, 4.3).

9. Disposition de miroir selon la revendication 8, **caractérisée en ce que** les moyens pour détecter les modifications de la longueur de trajet dans le trajet des faisceaux de mesure primaire et secondaires (4.1, 4.2, 4.3) sont des systèmes de mesure à interféromètres fonctionnant selon le principe de l'hétérodyne, **en ce qu'**il est prévu des moyens (14) pour la déviation d'un faisceau de référence primaire (15) à partir d'un faisceau laser (13) et un modulateur (18) destiné à moduler le faisceau laser (13) pour donner le faisceau de mesure primaire (4), et **en ce que** des moyens (25.1, 25.2, 25.3) pour la déviation des faisceaux de référence (15.1, 15.2, 15.3) sont prévus avant le modulateur (18) et des moyens (28.1, 28.2, 28.3) pour la déviation des faisceaux de mesure secondaires (4.1, 4.2, 4.3) après le modulateur (18).

10. Disposition de miroir selon la revendication 8 ou 9, **caractérisée en ce que** le miroir-cible de poursuite (1) peut tourner autour d'au moins un axe de rotation (A, B) et **en ce que** les faisceaux de mesure secondaires (4.1, 4.2, 4.3) sont tangents à des segments de cercle décrits par les rétroréflecteurs (3.1, 3.2, 3.3) lors d'une rotation du miroir-cible de poursuite (1).

11. Disposition de miroir selon la revendication 10, **caractérisée en ce que** le miroir-cible de poursuite (1) est supporté dans une suspension à cardan, dans laquelle il peut tourner autour d'un axe intérieur (A) et d'un axe extérieur (B), lesquels axes se coupent à angle droit et sont disposés parallèlement à la surface réfléchissante du miroir-cible de poursuite (1).

12. Disposition de miroir selon la revendication 1, **caractérisée en ce que** les faisceaux de mesure secondaires (4.1, 4.2, 4.3) sont parallèles entre eux et perpendiculaires à la surface réfléchissante du miroir-cible de poursuite (1) lorsque celui-ci se trouve dans une position centrale.

13. Disposition de miroir selon l'une quelconque des revendications 11 ou 12, **caractérisée en ce que** deux rétroréflecteurs (3.1, 3.2) sont disposés sur une tige de liaison (2) capable de rotation autour de l'axe intérieur (A) avec le miroir-cible de poursuite (1).

14. Disposition de miroir selon la revendication 13, **caractérisée en ce qu'**un troisième rétroréflecteur (3.3) est associé à l'axe interne (A).

15. Disposition de miroir selon la revendication 14, **caractérisée en ce que** les trois rétroréflecteurs (3.1, 3.2, 3.3) forment un triangle équilatéral disposé parallèlement à la surface réfléchissante du miroir-cible de poursuite (1) et dont le centre est la projection de l'intersection des axes.

16. Disposition de miroir selon l'une ou l'ensemble des revendications 10 à 15, **caractérisée en ce que** des moteurs stationnaires (6.1, 6.2) et des moyens de transmission de la force sont prévus pour faire tourner le miroir-cible de poursuite (1).

17. Disposition de miroir selon la revendication 16, **caractérisée en ce que** les moyens de transmission de la force sont des poulies ou des tiges filetées.

## Claims

1. A method for determining the spatial orientation of a movable target tracking mirror (1) of a laser tracking system, in which the direction of a primary measurement beam (4) is changed by changing the spatial orientation of the target tracking mirror (1), direction changes of the primary measurement beam (4) are detected by determining the spatial orientation of the target tracking mirror (1) and path length changes in the beam path of the primary measurement beam (4) are detected with interferometric methods, **characterized in that** from the primary measurement beam (4) at least two secondary measurement beams (4.1, 4.2, 4.3) and secondary reference beams (15.1, 15.2, 15.3) allocated to the secondary reference beams are branched off, that the secondary measurement beams (4.1, 4.2, 4.3) are directed in an unchangeable direction towards in each case a retroreflector (3.1, 3.2, 3.3) movable with the target tracking mirror (1), that changes of the path length of the secondary measurement beams (4.1, 4.2, 4.3) on movement of the target tracking mirror (1) out of a predetermined zero orientation into an orientation to be determined are interferometrically detected and that the interferometrically detected path length changes are used for computing the orientation of the target tracking mirror (1).

2. A method according to claim 1, **characterized in that** the target tracking mirror (1) is rotatable about at least one rotational axis (A) and that the secondary measurement beams (4.1, 4.2, 4.3) are directed tangentially on circular arcs on which the retroreflectors (3.1, 3.2, 3.3) move on rotation of the target tracking mirror (1).

3. A method according to claim 1 or 2, **characterized in that** the target tracking mirror (1) is rotatable about two rotational axes (A and B) intersecting perpendicularly and arranged in parallel to the mirror surface, that the retroreflectors (3.1, 3.2, 3.3) are arranged in a plane parallel to the mirror surface of the target tracking mirror (1) and that the secondary measurement beams (4.1, 4.2, 4.3) are parallel to one another and when the target tracking mirror (1) has middle orientation, are directed perpendicularly onto the mirror surface.

4. A method according to one of the claims 1 to 3, **characterized in that** three retroreflectors (3.1, 3.2, 3.3) are arranged in a manner such that their positions determine the spatial orientation of the mirror surface of the target tracking mirror (1) in an unambiguous manner.

5. A method according to claim 3, **characterized in that** two retroreflectors (3.1, 3.2) are arranged in a manner such that they together with the rotational axes (A, B) unambiguously determine the spatial orientation of the mirror surface of the target tracking mirror (1).

6. A method according to one of the claims 1 to 5, **characterized in that** path length changes of the beam paths of the primary and of the secondary measurement beams (4, 4.1, 4.2, 4.3) are interferometrically measured according to the heterodyne method.

7. A method according to claim 6, **characterized in that** a laser beam (13) is modulated in a modulator (18) into the primary measurement beam (4), that in front of the modulator (18) one primary and at least two secondary reference beams (15, 15.1, 15.2, 15.3) are deflected out of the laser beam (13) and that after the modulator (18) the secondary measurement beams (4.1, 4.2, 4.3) are deflected out of the primary measurement beam (4).

8. A mirror arrangement for a laser tracking system, said mirror arrangement comprising a target tracking mirror (1), means for changing the spatial orientation of the target tracking mirror (1), means for producing a primary measurement beam (4) directed onto the target tracking mirror (1) with a direction which is changeable by way of changing the spatial orientation of the target tracking mirror (1), means for detecting the spatial orientation of the target tracking mirror (1) for determining direction changes of the primary measurement beam (4) and means for interferometric detection of path length changes in the beam path of the primary measurement beam (4), **characterized in that** the means for determining the spatial orientation of the target tracking mirror (1) comprises at least two retroreflectors (3.1, 3.2, 3.3) which are connected to the target tracking mirror (1) in a manner such that their position is changed when the orientation of the target tracking mirror (1) is changed, as well as means (28.1, 28.2, 28.3) for deflecting at least two secondary measurement beams (4.1, 4.2, 4.3) allocated in each case to one of said retroreflectors (3.1, 3.2, 3.3) and secondary reference (15.1, 15.2, 15.3) beams allocated to the secondary measurement beams out of the primary measurement beam (4), means (29.1, 29.2, 29.3) for directing the secondary measurement beams (4.1, 4.2, 4.3) onto in each case one of said retroreflectors (3.1, 3.2, 3.3), means for interferometrically analyzing secondary measurement and reference beams allocated to each other for detecting path length changes in the beam paths of the secondary measurement beams (4.1, 4.2, 4.3) and means for computing the spatial orientation of the target tracking mirror (1) from the detected path length changes in the beam paths of the secondary measurement beams (4.1, 4.2, 4.3).

9. A mirror arrangement according to claim 8, **characterized in that** the means for detecting path length changes in the beam path of the primary and of the secondary measurement beams (4, 4.1, 4.2, 4.3) are interferometer measurement systems functioning according to the heterodyne method, that means (14) for deflecting a primary reference beam (15) out of a laser beam (13) and a modulator (18) for modulating the laser beam (13) into the primary measurement beam (4) are provided and that in front of the modulator (18) there are provided means (25.1, 25.2, 25.3) for deflecting out the secondary reference beams (15.1, 15.2, 15.3) which means (28.1, 28.2, 28.3) for deflecting out the secondary measurement beams (4.1, 4.2, 4.3) are arranged after the modulator (18).

10. A mirror arrangement according to claim 8 or 9, **characterized in that** the target tracking mirror (1) is rotatably arranged about at least one rotational axis (A, B) and that the secondary measurement beams (4.1, 4.2, 4.3) are directed tangentially to circular arcs described by the retroreflectors (3.1, 3.2, 3.3) on rotation of the target tracking mirror (1).

11. A mirror arrangement according to claim 10, **characterized in that** the target tracking mirror (1) is mounted in a cardanic suspension in which it is rotatable about an inner axis (A) and an outer axis (B), said axes (A,B) intersecting perpendicularly and being arranged parallel to the mirror surface of the target tracking mirror (1).

12. A mirror arrangement according to claim 11, **characterized in that** the secondary measurement beams (4.1, 4.2, 4.3) are directed parallel to one another and perpendicular to the mirror surface of the target tracking mirror (1) when having a middle orientation.

13. A mirror arrangement according to one of claims 11 or 12, **characterized in that** two retroreflectors (3.1, 3.2) are arranged on a connection rod (2) rotatable with the target tracking mirror (1) about the inner axis (A).

14. A mirror arrangement according to claim 13, **characterized in that** a third retroreflector (3.3) is arranged on the inner axis (A).

15. A mirror arrangement according to claim 14, **characterized in that** the three retroreflectors (3.1, 3.2, 3.3) form an equilateral triangle which is arranged parallel to the mirror surface of the target tracking mirror (1) and whose middle point is the projection of the axes intersection point.

16. A mirror arrangement according to one of claims 10 to 15, **characterized in that** for rotating the target tracking mirror (1) there are provided stationary motors (6.1, 6.2) and force transmission means.

17. A mirror arrangement according to claim 16, **characterized in that** the force transmission means are pull cables or threaded rods.
